# EUROPEAN PATENT APPLICATION

(11) **EP 1 755 229 A1**
(43) Date of publication of application: **21.02.2007**
(21) Application number: 05727133.0
(22) Date of filing: 24.03.2005
(51) Int. Cl.: H04B 1/16, H04N 5/44

(54) **RECEIVER APPARATUS**

(30) Priority: 09.06.2004 JP 2004171459
(71) Applicant: MITSUBISHI DENKI KABUSHIKI KAISHA, Chiyoda-ku, Tokyo 100-8310 (JP)
(72) Inventor: AOYAGI, Takahisa MITSUBISHI DENKI KABUSHIKI KAISHA, Chiyoda-ku, Tokyo 1008310 (JP); NAKAMURA, Tetsuo MITSUBISHI DENKI KABUSHIKI KAISHA, Chiyoda-ku, Tokyo 1008310 (JP)
(74) Representative: HOFFMANN EITLE
(86) International application number: PCT/JP2005/005411
(87) International publication number: WO 2005/122413

(57) **Abstract**

A receiving apparatus (10), which is mounted on a mobile unit, selectively receives a transmitted signal from a transmitting station located in each transmission area. A delay profile detecting circuit (26) detects a delay profile indicating relative intensity and delay time between the transmitted signal and delay signals produced by the reflection of the transmitted signal. A control circuit (29) estimates a receiving environment in which the mobile unit is located according to the delay profile. The control circuit carries out reception switching between the transmitted signals from the transmitting station sending the currently received transmitted signal and from another transmitting station in response to the receiving quality and receiving environment of the transmitted signal.

## Description

### TECHNICAL FIELD

The present invention relates to a receiving apparatus used by mobile units such as vehicles, and more particularly to a receiving apparatus for receiving digital broadcast waves.

### BACKGROUND ART

Generally, in digital broadcasting utilizing terrestrial waves, broadcast waves from a master station are transmitted from a plurality of transmitting stations (repeater stations), each of which has its own transmission area. Then, as for the broadcast waves the transmitting stations transmit, adjacent transmitting stations, for example, use different transmission frequencies to prevent radio interference.

While a receiving apparatus mounted on a mobile unit such as a vehicle receives broadcast waves, a transmitting station can change as the mobile unit moves. In other words, the transmitting station that transmits broadcast waves receivable by the mobile unit varies. Accordingly, when the receivable transmitting station changes, it becomes impossible for the receiving apparatus to receive the broadcast waves from the transmitting station up to now, and the user must select a transmission frequency (channel) of a new transmitting station that becomes receivable. Thus, it is unavoidable that the reception of the broadcast program is once interrupted.

To prevent such a problem by automatically selecting a receivable transmitting station when the receivable transmitting station changes as the mobile unit moves, an apparatus is known which enables receiving the broadcast program continuously. The apparatus, which includes a digital broadcasting tuner, a digital demodulator circuit and a GPS circuit, receives and stores channel allocation information about surrounding transmitting stations, and switches a channel by detecting that the apparatus moves to the transmission area of another transmitting station by the signal intensity and GPS position information, thereby enabling reception continuously even if the receivable broadcasting frequency varies one after another (for example, see Relevant Reference 1).

Relevant Reference 1: Japanese patent application laid-open No. 2001-53635 (paragraphs (0013)-(0036), FIGs. 1 and 6).

With the foregoing configuration, the conventional receiver detects the present location of the mobile unit with the GPS circuit, obtains the traveling direction of the mobile unit in response to the present location, obtains the receiving intensity of the present broadcast wave, and determines the next transmitting station to be received in response to the present location and the traveling direction of the mobile unit when the receiving intensity reduces, thereby being able to receive the broadcast program continuously. However, it must include at least a positioning system such as a GPS receiver for positioning the present location of the mobile unit in addition to the receiving apparatus for receiving the broadcast waves. Thus, it is difficult to continuously receive the broadcast program by only the receiving apparatus for receiving the broadcast waves.

As described above, the conventional receiving apparatus must include the additional positioning system such as the GPS receiver, which presents a problem of increasing not only the entire configuration of the apparatus, but also its cost.

The present invention is implemented to solve the foregoing problems. Therefore it is an object of the present invention to provide a receiving apparatus capable of receiving a transmitted signal such as a broadcast program continuously regardless of the position of the mobile unit such as a vehicle with an inexpensive configuration.

### DISCLOSURE OF THE INVENTION

The receiving apparatus in accordance with the present invention includes delay profile detecting means for detecting a delay profile indicating relative intensity and delay time between the transmitted signal and delay signals produced by reflection of the transmitted signal; receiving environment estimating means for estimating a receiving environment in which the mobile unit is located according to the delay profile; receiving quality detecting means for detecting receiving quality of the transmitted signal; and reception switching control means for carrying out reception switching between transmitted signals from the transmitting station sending the currently received transmitted signal and from another transmitting station in response the receiving environment and the receiving quality.

Thus, it is configured in such a manner as to estimate the currently receiving environment from the delay profile by only receiving the broadcasting signal. As a result, it offers an advantage of being able to continuously receive the transmitted signal stably and positively with an inexpensive configuration regardless of the location of the mobile unit without a positioning system such as a GPS receiver.

### BRIEF DESCRIPTION OF THE DRAWINGS

FIG. 1 is a block diagram showing a configuration of a receiving apparatus of an embodiment 1 in accordance with the present invention;
FIG. 2 is a block diagram showing a configuration of the delay profile detecting circuit used in the receiving apparatus as shown in FIG. 1;
FIG. 3 is a graph illustrating a delay profile in urban areas, which is detected by the delay profile detecting circuit as shown in FIG. 2;
FIG. 4 is a graph illustrating a delay profile in the suburbs, which is detected by the delay profile detecting circuit as shown in FIG. 2;
FIG. 5 is a block diagram showing a configuration of a control circuit used in the receiving apparatus as shown in FIG. 1;
FIG. 6 is a diagram showing an allocation configuration of transmitting stations and transmission areas; and
FIG. 7 is a flowchart illustrating the reception switching control in the receiving apparatus as shown in FIG. 1.

### BEST MODE FOR CARRYING OUT THE INVENTION

The best mode for carrying out the invention will now be described with reference to the accompanying drawings to explain the present invention in more detail.

### EMBODIMENT 1

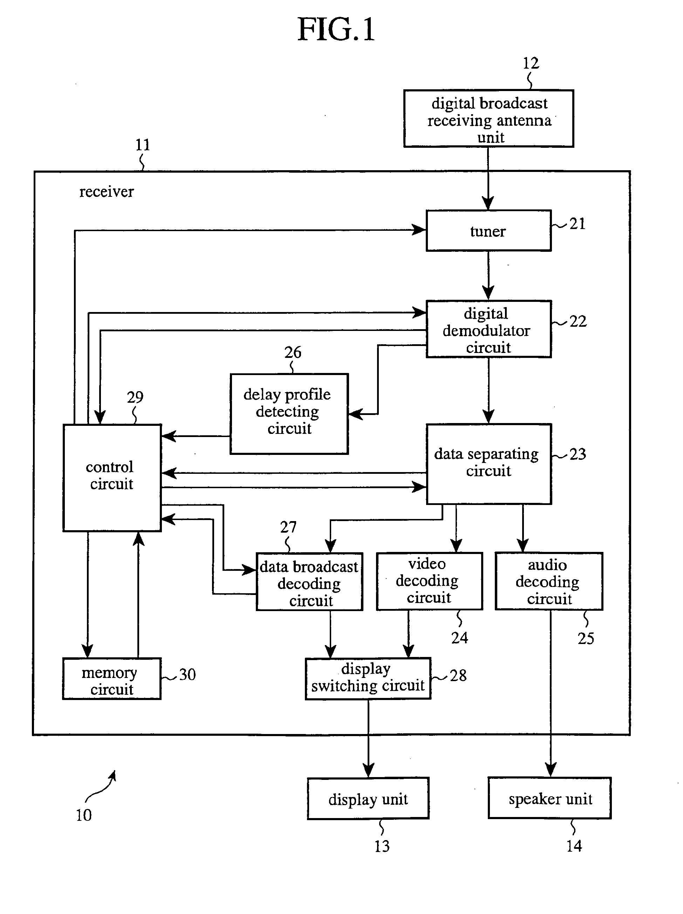

First, a receiving apparatus for receiving terrestrial digital broadcast waves as the broadcast waves will be described with reference to FIG. 1. To deliver affiliated broadcast with the same data to a plurality of areas (called transmission areas) by the terrestrial digital broadcasting, a transmitting station (repeater station) is installed in each transmission area, and the terrestrial digital broadcast waves are transmitted from these transmitting stations besides the master station. In this case (for example, when delivering affiliated broadcast in a plurality of transmission areas), an MFN system (Multi-Frequency Network: Multi-frequency relay) using a plurality of channels or an SFN system (Single-Frequency Network: Single-frequency relay) using a single channel is employed. Accordingly, to receive the terrestrial digital broadcast waves continuously with the receiving apparatus mounted on the mobile unit such as a vehicle, it is necessary for the receiving apparatus to select a transmitting station according to the movement of the vehicle.

The terrestrial digital broadcast wave includes a digital video signal, a digital audio signal, channel allocation data and data associated with the data broadcasting (called "data broadcast data" from now on). The channel allocation data includes frequency allocation information and program information as will be described later: the frequency allocation information represents the frequency allocation of the channels associated with the terrestrial digital broadcast waves transmitted from the station itself and from adjacent transmitting stations; and the program information represents broadcast programs transmitted through the channels.

The receiving apparatus 10 as shown in FIG. 1 has a receiver 11, and is mounted on a vehicle, for example. To the receiver 11, a digital broadcast receiving antenna unit (simply called "antenna unit" from now on) 12, a display unit 13, and a speaker unit 14 are connected. As shown in FIG. 1, the receiver 11 includes a tuner 21, a digital demodulator circuit 22, a data separating circuit 23, a video decoding circuit 24, an audio decoding circuit 25, a delay profile detecting circuit 26, a data broadcast decoding circuit 27, a display switching circuit 28, a control circuit 29, and a memory circuit 30.

The control circuit 29 supplies the tuner 21 with a tuner control signal as will be described later, and sets a channel (transmission frequency) to be selected by the tuner 21. Thus, the tuner 21 receives the broadcast wave of the channel set by the control circuit 29 through the antenna unit 12 as the receiving signal, converts it to an intermediate frequency (IF) signal, and supplies it to the digital demodulator circuit 22. The digital demodulator circuit 22 digitally demodulates the IF signal to convert it to the digital data, and delivers the digital data to the data separating circuit 23.

The data separating circuit 23 separates from the digital data, the digital video signal, digital audio signal, channel allocation data and data broadcast data, and supplies the digital video signal, digital audio signal, channel allocation data and data broadcast data to the video decoding circuit 24, audio decoding circuit 25, control circuit 29 and data broadcast decoding circuit 27, respectively.

The digital video signal is decoded by the video decoding circuit 24 and is fed to the display switching circuit 28 as the video signal. Likewise, the data broadcast data is decoded by the data broadcast decoding circuit 27 and is fed to the display switching circuit 28 as the data broadcasting display signal. Then, in response to the selection of the user, the display switching circuit 28 supplies the display unit 13 with one of the video signal and data broadcasting display signal selectively, or with the video signal and data broadcasting display signal superimposed on each other.

As a result, the display unit 13 displays a character string or the like associated with one of the video and data broadcasting selectively, or displays the superimposition of them. On the other hand, the digital audio signal is decoded by the audio decoding circuit 25, and is supplied to the speaker unit 14 as the audio signal so that the speaker unit 14 outputs it as sounds. Receiving the channel allocation data, the control circuit 29 stores the channel allocation data in the memory circuit 30.

The digital demodulator circuit 22 detects the receiving quality of the terrestrial digital broadcast wave during the demodulation of the IF signal. For example, it detects the receiving intensity, carrier-to-noise ratio (C/N ratio) and MER (Modulation Error Rate), or BER (Bit Error Rate), and supplies the control circuit 29 with the receiving quality detection signal indicating the receiving quality of the terrestrial digital broadcast wave. In addition, the data broadcast decoding circuit 27 detects the CRC (Cyclic Redundancy Check) error during the decoding of the data broadcast data, and supplies it to the control circuit 29 as an error detection signal.

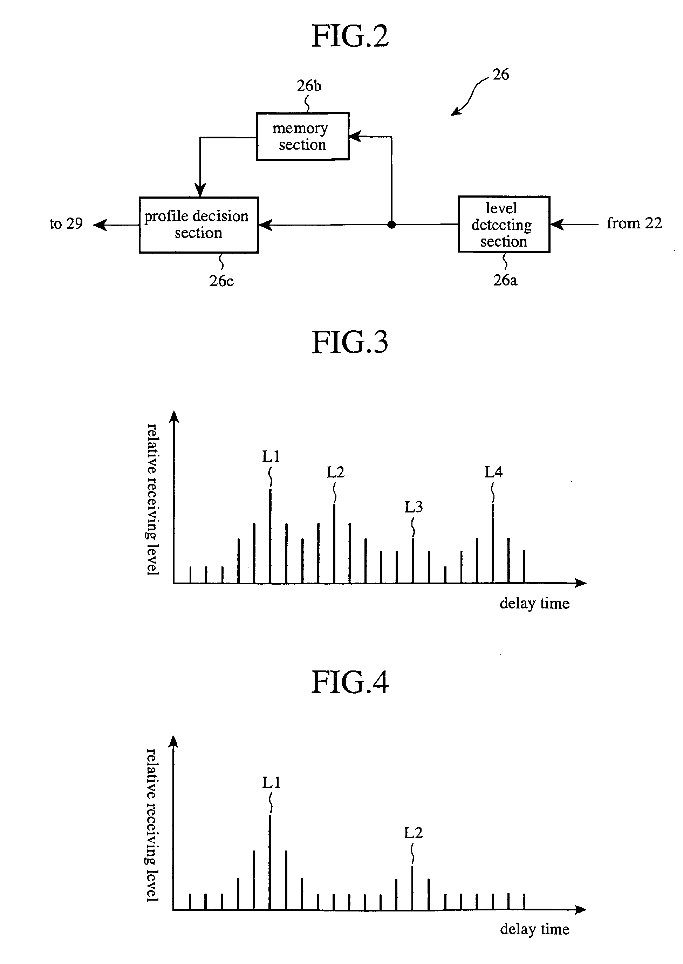

On the other hand, the digital demodulator circuit 22 supplies the digital data to the delay profile detecting circuit 26 which detects the delay profile according to the digital data. More specifically, as shown in FIG. 2, the delay profile detecting circuit 26 has a level detecting section 26a, a memory section 26b, and a profile decision section 26c. Being supplied with the digital data, the level detecting section 26a detects the receiving level (intensity) thereof, writes it into the memory section 26b as the receiving level, and supplies the receiving level to the profile decision section 26c.

As described before, the receiving apparatus 10 receives a desired terrestrial digital broadcast wave. In this case, the receiving apparatus 10 receives not only the broadcast wave directly from the transmitting station (which is called "direct wave"), but also reflected waves caused by the reflection of the broadcast wave from obstacles and the like. The foregoing delay profile indicates the relative ratios between the receiving levels of the direct wave and delay waves, and the delay time from the direct wave to the delay waves.

The receiving level of the direct wave is written in the memory section 26b as the first receiving level, and is supplied from the level detecting section 26a to the profile decision section 26c as the first receiving level. In this state, since the output of the memory section 26b is zero, the profile decision section 26c outputs the first receiving level as the first relative receiving level L1.

Subsequently, the level detecting section 26a detects the receiving level of the first delay wave next to the direct wave. The receiving level is written in the memory section 26b as the second receiving level, and is supplied to the profile decision section 26c. In this case, the memory section 26b outputs the first receiving level, and the profile decision section 26c compares the first and second receiving levels, and outputs the relative level of the second receiving level with respect to the first receiving level as the second relative receiving level L2. Likewise, the profile decision section 26c outputs the third relative receiving level L3.

In this way, the profile decision section 26c outputs the first to Nth (N is an integer equal to or greater than two) relative receiving levels as the delay profile. Incidentally, as for the radio waves other than the reflected waves, the relative receiving levels are output. However, since the delay profile has a specific pattern as will be described later, it is possible to make a decision as to whether the relative receiving levels are associated with the delay waves from the delay profile.

While the vehicle is located in an urban area where structures such as buildings are densely constructed, a lot of structures become obstacles, and hence a greater number of the delay waves occur. As a result, the delay profile as shown in FIG. 3, for example, is obtained. On the other hand, since the structures such as buildings are sparse in the suburbs, a smaller number of the delay waves appear than in the urban areas. Thus, the delay profile as shown in FIG. 4, for example, is obtained.

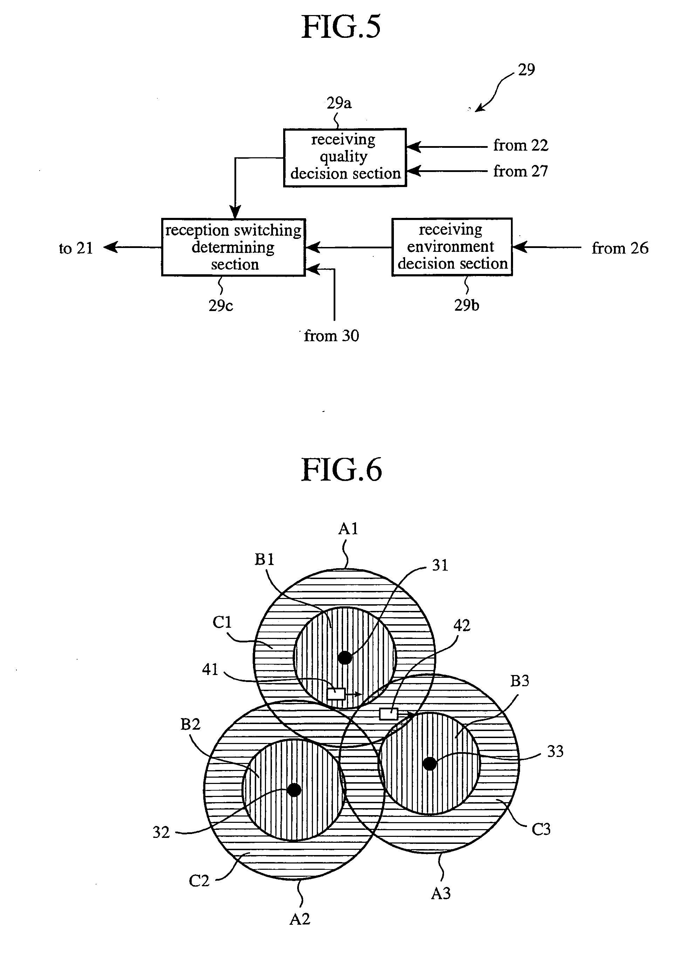

The delay profile is fed to the control circuit 29 as a receiving environment signal. As shown in FIG. 5, the control circuit 29 includes a receiving quality decision section 29a, a receiving environment decision section 29b, and a reception switching determining section 29c. The receiving environment decision section 29b decides the broadcast wave receiving environment where the vehicle is located in response to the receiving environment signal, and outputs the receiving environment decision signal. On the other hand, the receiving quality decision section 29a decides the receiving quality of the currently receiving broadcast wave in response to the receiving quality detection signal and error detection signal (the error detection signal is also a part of the receiving quality signal), and outputs the receiving quality decision signal.

For example, the receiving quality decision section 29a outputs, when the receiving quality the receiving quality signal represents is lower than a preset threshold value, a receiving quality decision signal indicating receiving quality degradation. In contrast, when the receiving quality the receiving quality signal represents is higher than the preset threshold value, it outputs the receiving quality decision signal indicating receiving quality satisfactory.

Incidentally, to decide the receiving quality, it is enough to make the receiving quality decision based on at least one of the receiving intensity and C/N ratio. Furthermore, considering at least one of the MER, BER and CRC can improve the decision accuracy.

The reception switching determining section 29c receives the receiving environment decision signal and receiving quality decision signal. In addition, it reads the channel allocation data from the memory apparatus 30, decides the transmitting station to be received in response to the receiving environment decision signal, receiving quality decision signal and channel allocation data as will be described later, and delivers a station-selection signal to the tuner 21. Thus, the tuner 21 receives the broadcast wave transmitted from the broadcasting station indicated by the station-selection signal.

Next, the operation will be described.
First, referring to FIG. 6, let us assume that transmitting stations 31-33 are placed in urban areas, and that the transmitting stations 31-33 have transmission areas A1-A3, respectively. The transmission area A1 is defined by an urban area B1 and a suburban area C1 around the urban area B1. Likewise, the transmission areas A2 and A3 are defined by urban areas B2 and B3 and suburban areas C2 and C3 around the urban areas B2 and B3, respectively.

Here, the urban areas B1-B3 have a greater number of structures such as buildings, and the suburban areas C1-C3 have a smaller number of structures. In addition, the transmission areas A1-A3 have overlapped portions as shown in FIG. 6.

Assume that the vehicle 41 travels in the urban area B1, and receives the broadcast wave sent from the transmitting station 31 (the broadcast wave sent from the transmitting station is called the first broadcast wave from now on). As described before, the first broadcast wave includes channel allocation data. In the example of FIG. 6, the channel allocation data includes the channel frequency allocation information of the transmitting station 31 and transmitting stations 32 and 33 adjacent to the transmitting station, and the program information indicating broadcast programs transmitted through individual channels.

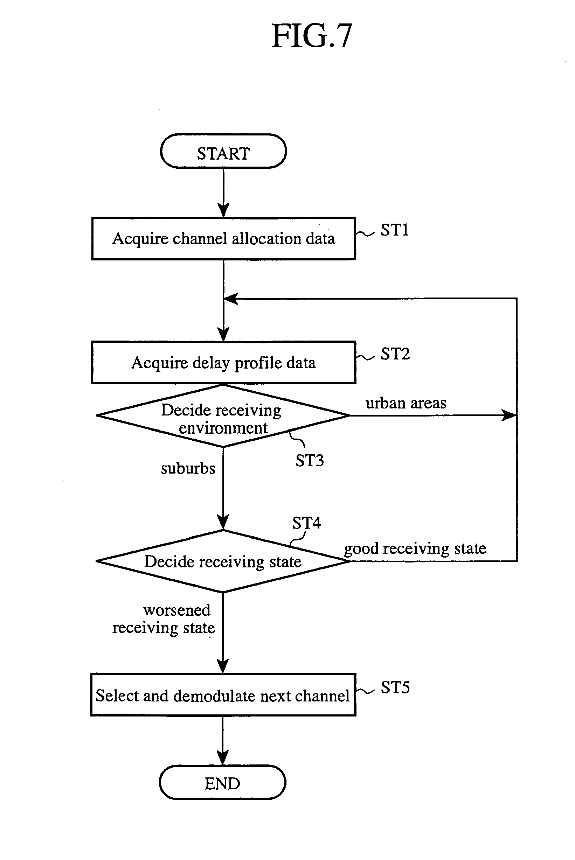

Referring to FIG. 7 as well, the channel allocation data is stored in the memory circuit 30 by the control circuit 29 as described before (acquire channel allocation data: step ST1). In addition, the control circuit 29 is provided with the receiving environment signal (delay profile) (acquire delay profile: step ST2). Thus, the receiving environment decision section 29b decides the receiving environment, first, in which the vehicle 41 is located in response to the receiving environment signal (decide receiving environment: step ST3).

For example, as described before in connection with FIGs. 3 and 4, the delay profile in the urban areas has a pattern different from the delay profile in the suburbs. In the delay profile in the urban areas, the first to fourth relative receiving levels L1-L4 appear at short intervals. In contrast, in the delay profile in the suburbs, the first and second relative receiving levels appear at long intervals.

Furthermore, the delay profile in the urban areas includes a greater number of the relative receiving levels corresponding to the delay waves, and the delay profile in the suburbs includes a smaller number of the relative receiving levels corresponding to the delay waves. Incidentally, as for the delay profiles in both the urban areas and suburbs, the relative receiving levels of the delay waves can be determined by identifying the relative receiving level that becomes maximum after the first relative receiving level, which has the highest relative level, as the relative receiving level associated with the first delay wave (that is, the second relative receiving level), and by identifying the subsequent relative receiving levels that become maximum sequentially as the relative receiving levels associated with the delay waves.

Thus, the delay profile has different patterns depending on whether it is associated with the urban areas or the suburbs. Accordingly, the receiving environment decision section 29b can estimate whether the vehicle 41 is located in the urban area B1 or in the suburban area C1 according to the delay profile (that is, the receiving environment signal). The receiving environment decision section 29b outputs the receiving environment decision signal indicating whether the vehicle 41 is located in the urban area B1 or in the suburban area C1 according to the delay profile.

For example, the receiving environment decision section 29b makes a decision that the vehicle 41 is located in the urban area B1 if the sum of the relative receiving levels corresponding to the delay waves exceeds a preset reference value, and that the vehicle 41 is located in the suburban area C1 if the sum of the relative receiving levels corresponding to the delay waves is equal to or less than a preset reference value.

Alternatively, the receiving environment decision section 29b can make a decision that the vehicle 41 is located in the urban area B1 if the number of the relative receiving levels corresponding to the delay waves exceeds a predetermined reference number, and that the vehicle 41 is located in the suburban area C1 if the number of the relative receiving levels corresponding to the delay waves is equal to or less than a predetermined reference number.

Since the vehicle 41 is located in the urban area B1 at present, the receiving environment decision signal indicates that the vehicle 41 is located in the urban area. In this case, the reception switching determining section 29c does not carry out reception switching because the vehicle 41 is located in the urban areas, and does not supply the tuner 21 with the tuner control signal. Thus, the broadcast wave from the transmitting station 31 is continuously received, and the processing returns to step ST1.

Assume that the vehicle 41 continues traveling and reaches the position indicated by the reference numeral 42, that is, the vehicle 41 is now located in the suburban area C1. Then the receiving environment decision section 29b outputs the receiving environment decision signal indicating that the vehicle 41 is located in the suburban area Cl according to the delay profile. When the receiving environment decision signal indicates that the vehicle 41 is located in the suburban area C1, the reception switching determining section 29c assumes that the vehicle 41 is located in the suburbs, and checks the receiving quality decision signal delivered from the receiving quality decision section 29a (receiving state decision: step ST4). If the reception switching determining section 29c makes a decision that the receiving state is good at step ST4, it does not carry out the reception switching, continues receiving the broadcast wave from the transmitting station 31, and returns the processing to step ST1.

On the other hand, if the reception switching determining section 29c makes a decision that the receiving state worsens (degrades) at step ST4, it accesses the memory circuit 30 to retrieve the channel allocation data, obtains the frequency allocation information of the channels associated with the broadcast waves transmitted from the transmitting stations 32 and 33 adjacent to the transmitting station 31 and program information transmitted through the channels, and checks the transmitting station to be received in place of the transmitting station 31. In the example of FIG. 6, both the transmitting stations 32 and 33 carry out an affiliated broadcasting, and the reception switching determining section 29c recognizes that the transmitting stations adjacent to the transmitting station 31 are the transmitting stations 32 and 33.

The reception switching determining section 29c supplies the tuner 21 with the tuner control signal to receive the broadcast wave from the transmitting station 32 or 33. Thus, the tuner 21 receives the broadcast wave from the transmitting station 32 or 33. Then the reception switching determining section 29c obtains from the receiving quality decision section 29a the receiving quality decision signal associated with the broadcast wave received, and makes a decision as to whether the receiving state is good or not. Thus, the broadcast wave from the transmitting station that provides a better receiving state between the transmitting stations 32 and 33 is received (select and demodulate next channel: step ST5).

Incidentally, as for a diversity receiving apparatus including a plurality of antenna units 12, tuners 21, and digital demodulator circuits 22 as shown in FIG. 1, one antenna unit can be used to continue receiving the broadcast wave from the transmitting station 31, and another antenna unit can be used to make a decision as to whether the receiving state of the broadcast wave from the transmitting station to be received next is good or not in the same manner as described above, thereby selecting the transmitting station.

In this way, the present embodiment is configured such that it estimates whether the vehicle (that is, the receiving apparatus) is located in the urban areas or in the suburbs according to the delay profile; decides the moving direction of the vehicle (whether it is traveling from the urban areas to the suburbs, or from the suburbs to the urban areas) by detecting the delay profile continuously; and makes a decision, when the receiving environment of the receiving apparatus changes (such as the vehicle is located in the suburbs), as to the broadcast wave from the transmitting station to be received next from the channel allocation data in response to the receiving quality. As a result, the present embodiment can obviate the need for the positioning system such as the GPS receiver, and enables the user to view or listen to the broadcast program continuously in accordance with position of the vehicle.

As is clear from the description above, the delay profile detecting circuit 26 functions as a delay profile detecting means, and a combination of the digital demodulator circuit 22 and data broadcast decoding circuit 27 functions as a receiving quality detecting means. In addition, the control circuit 29 functions as a receiving environment estimating means and a reception switching control means.

As described above, the present embodiment 1 is configured in such a manner that the delay profile detecting circuit 26 detects, as to the broadcast wave and the delay waves produced by the reflection of the broadcast wave, the relative intensity between them, and the delay profile indicating the delay time; and that the control circuit 29 estimates the receiving environment in which the vehicle is located according to he delay profile, and then the control circuit 29 carries out the reception switching between the transmitting waves from the transmitting station sending the broadcast wave currently received and from another transmitting station according to the receiving quality of the broadcast waves and to the receiving environment. As a result, the present embodiment 1 offers an advantage of being able to obviate the need for the positioning system such as the GPS receiver, and to receive the broadcast wave continuously in accordance with the position of the vehicle.

According to the present embodiment 1, since it is configured such that it detects the receiving quality in response to at least the receiving intensity or C/N ratio of the broadcast wave, it offers an advantage of being able to detect the receiving quality easily.

According to the present embodiment 1, since it is configured such that it detects the receiving quality in response to at least one of the modulation error rate, bit error rate, and cyclic redundancy check error associated with the demodulation signal obtained by demodulating the broadcast wave, it offers an advantage of being able to detect and decide the receiving quality of the broadcast wave at high accuracy.

According to the present embodiment 1, since it is configured such that when the control circuit 29 makes a decision that the receiving environment changes, and when the receiving quality falls below the predetermined quality, it carries out the reception switching to the transmitted signal from a second transmitting station, it offers an advantage of being able to carry out the switching of the transmitting station appropriately in accordance with the location of the vehicle.

According to the present embodiment 1, since it is configured such that the control circuit 29 selects one of the transmitting station sending the currently received broadcast wave and the second transmitting station in response to the channel allocation data, it offers an advantage of being able to easily select the transmitting station sending the same broadcast program.

### INDUSTRIAL APPLICABILITY

The present invention is suitably applicable to receiving apparatuses for receiving digital broadcast waves used by mobile units such as vehicles.

## Claims

1. A receiving apparatus that is mounted on a mobile unit and selectively receives a transmitted signal from a transmitting station located in each transmission area, said receiving apparatus comprising:
delay profile detecting means for detecting a delay profile indicating relative intensity and delay time between the transmitted signal and delay signals produced by reflection of the transmitted signal;
receiving environment estimating means for estimating a receiving environment in which said mobile unit is located according to the delay profile;
receiving quality detecting means for detecting receiving quality of the transmitted signal; and
reception switching control means for carrying out reception switching between transmitted signals from the transmitting station sending the currently received transmitted signal and from another transmitting station in response the receiving environment and the receiving quality.

2. The receiving apparatus according to claim 1, wherein said receiving quality detecting means detects the receiving quality according to at least one of receiving intensity and a carrier-to-noise ratio of the transmitted signal.

3. The receiving apparatus according to claim 2, wherein said receiving quality detecting means detects the receiving quality according to at least one of a modulation error rate, bit error rate and cyclic redundancy check error associated with a demodulation signal obtained by demodulating the transmitted signal.

4. The receiving apparatus according to claim 1, wherein said reception switching control means carries out reception switching to the transmitted signal from the another transmitting station, when making a decision that the receiving environment estimated by said receiving environment estimating means changes, and when the receiving quality detected by said receiving quality detecting means falls below a predetermined quality.

5. The receiving apparatus according to claim 1, wherein
the currently received transmitted signal includes frequency allocation information about channels, through which the transmitting station sending the received transmitted signal and transmitting stations adjacent to that transmitting station carry out transmission, and channel allocation data having program information about broadcast programs transmitted through the channels, and wherein
said reception switching control means selects one of the transmitting station sending the currently received transmitted signal and the another transmitting station in response to the channel allocation data.
